(19) Europäisches Patentamt / European Patent Office / Office européen des brevets

(11) **EP 4 671 299 A1**

(12) **EUROPEAN PATENT APPLICATION**
published in accordance with Art. 153(4) EPC

(43) Date of publication:
**31.12.2025 Bulletin 2026/01**

(21) Application number: **24760303.8**

(22) Date of filing: **19.02.2024**

(51) International Patent Classification (IPC):
***C08G 63/672*** *(2006.01)*    ***C08G 63/78*** *(2006.01)*
***C08G 63/80*** *(2006.01)*

(52) Cooperative Patent Classification (CPC):
**C08G 63/672; C08G 63/78; C08G 63/80**

(86) International application number:
**PCT/JP2024/005758**

(87) International publication number:
**WO 2024/177004 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **20.02.2023 JP 2023024347**

(71) Applicant: **Toyobo Co., Ltd.**
**Kita-ku**
**Osaka-shi, Osaka 530-0001 (JP)**

(72) Inventors:
• **YAMAMOTO, Yu**
  **Otsu-shi, Shiga 520-0292 (JP)**
• **SASAI, Tamayo**
  **Otsu-shi, Shiga 520-0292 (JP)**

(74) Representative: **Müller-Boré & Partner**
**Patentanwälte PartG mbB**
**Friedenheimer Brücke 21**
**80639 München (DE)**

(54) **POLYESTER RESIN AND METHOD FOR PRODUCING POLYESTER RESIN**

(57)    An object of the present invention is to provide a polyester resin containing a polyvalent carboxylic acid having a furan backbone and ethylene glycol, the polyester resin having a sufficient molecular weight and achieving both improvement of a crystallization rate and excellent thermal stability.

The polyester resin of the present invention is a polyvalent carboxylic acid component and a polyhydric alcohol component as constituent components, wherein the polyester resin satisfies the following (1) to (4): (1) the polyester resin contains a polyvalent carboxylic acid having a furan backbone as the polyvalent carboxylic acid component, and contains ethylene glycol as the polyhydric alcohol component; (2) when measured through differential scanning calorimetry (DSC) at a heating rate of 10°C/minute, a cold crystallization peak temperature of the polyester resin during first heating is within a range of 145 to 185°C and a heat generation amount of the polyester resin during the first heating is 3 J/g or more; (3) a reduced viscosity of the polyester resin is 0.50 dl/g or more; and (4) the polyester resin contains at least one type of metal element selected from antimony, aluminum, titanium, and germanium, and a total content of the metal element is 350 ppm by mass or less.

[FIG. 1]

**Description**

TECHNICAL FIELD

The present invention relates to a polyester resin having a furan backbone and a method for producing a polyester resin having a furan backbone.

BACKGROUND ART

In recent years, polyethylene furanoate (PEF) made by using biomass-derived furan-2,5-dicarboxylic acid (FDCA) has been attracting attention as an environmentally-friendly or environmentally-sustainable material. PEF has gas barrier properties equal to or better than those of polyethylene terephthalate (PET) in addition to mechanical strength and thermal properties equivalent to those of PET. From such a viewpoint, PEF is expected to be used not only for bottles, films, and fibers for which PEF is usable instead of existing PET, but also for a wide range of purposes.

However, PEF has a less crystallization rate than PET, and this is considered as a problem in terms of production of a molded product. Similar to PET, a method including increasing a molecular weight through solid-state polymerization (SSP) is sometimes applied to PEF as well. However, if crystallinity is insufficient, blocking of the resin occurs in the course of the SSP. Consequently, the quality of the product may deteriorate. A method including performing annealing treatment preceding SSP in order to avoid such blocking has been known, but is not preferable from the viewpoint of environmental burden ascertained through life cycle assessment (LCA) and production cost.

In view of this, attempts have been made to enhance a crystallization rate by adjusting the reduced viscosity and the terminal acid value of a polyester made by using a crystal nucleating agent as disclosed in, for example, Patent Document 1. However, the attempts are insufficient.

In addition, there was an instance in which a cold crystallization peak of PEF was observed at a heating rate of 10°C/minute in differential scanning calorimetry (DSC) as disclosed in Non Patent Document 1. In this instance, however, a large amount of catalyst was used, and thus, in a thermal history during first heating, decrease in molecular weight due to pyrolysis was observed, and thermal stability was low.

CITATION LIST

PATENT DOCUMENTS

Patent Document 1: Japanese Laid-Open Patent Publication No. 2013-155388

NON PATENT DOCUMENTS

Non Patent Document 1: RSC Adv., 2016, 6, 101578-101586

SUMMARY OF THE INVENTION

PROBLEMS TO BE SOLVED BY THE INVENTION

Problems arise as follows. If the thermal stability is low, heat during processing may lead to degradation and decrease in resin characteristics, and decrease in molecular weight and coloring of the resin may occur. If the molecular weight is low, the crystallization rate can be increased, but the strength of the molded product may become insufficient. Meanwhile, if the molecular weight is high, it is difficult to achieve a high crystallization rate.

The present invention has been made to solve these problems of the conventional technologies, and an object of the present invention is to provide: a polyester resin containing a polyvalent carboxylic acid having a furan backbone and ethylene glycol, the polyester resin having a sufficient molecular weight and achieving both improvement of a crystallization rate and excellent thermal stability; and a production method for the polyester resin.

SOLUTION TO THE PROBLEMS

A polyester resin according to one aspect of the present disclosure contains a polyvalent carboxylic acid having a furan backbone as a polyvalent carboxylic acid component, and contains ethylene glycol as a polyhydric alcohol component. When measured through differential scanning calorimetry (DSC) at a heating rate of 10°C/minute, a cold crystallization peak temperature of the polyester resin during first heating is within a range of 145 to 185°C and a heat generation amount of the polyester resin during the first heating is 3 J/g or more. A reduced viscosity of the polyester resin is 0.50 dl/g or more. The polyester resin contains at least one type of metal element selected from antimony, aluminum, titanium, and germanium, and a total content of the metal element is 350 ppm by mass or less. The present inventors have found that a polyester resin that has a furan backbone and that can achieve a high crystallization rate even with a high molecular weight and further achieve thermal stability can be provided by: optimizing the amount of the metal element in the polyester resin; and furthermore, the cold crystallization peak temperature and the heat generation amount satisfying the aforementioned corresponding condition, the cold crystallization peak temperature and the heat generation amount having been obtained during first heating and measured through differential scanning calorimetry (DSC) at a heating rate of 10°C/minute. Thus, the present inventors have completed the present invention.

A production method for a polyester resin according to another aspect of the present disclosure is a production method for a polyester resin containing a polyvalent carboxylic acid having a furan backbone as a polyvalent carboxylic acid component, and containing ethylene glycol as a polyhydric alcohol component. The production method includes a step of applying a shear stress to a molten composition of a reaction product obtained through a step of performing a polycondensation reaction. The present inventors have found that, by applying a shear stress, the orientation of molecules in the polyester resin is fixed and is kept fixed without being undone even after re-melting, and a high crystallization rate can be maintained even after the re-melting.

That is, the present invention has the following configuration.

Item 1. A polyester resin containing a polyvalent carboxylic acid component and a polyhydric alcohol component as constituent components, wherein
the polyester resin satisfies the following (1) to (4):

(1) the polyester resin contains a polyvalent carboxylic acid having a furan backbone as the polyvalent carboxylic acid component, and contains ethylene glycol as the polyhydric alcohol component;
(2) when measured through differential scanning calorimetry (DSC) at a heating rate of 10°C/minute, a cold crystallization peak temperature of the polyester resin during first heating is within a range of 145 to 185°C and a heat generation amount of the polyester resin during the first heating is 3 J/g or more;
(3) a reduced viscosity of the polyester resin is 0.50 dl/g or more; and
(4) the polyester resin contains at least one type of metal element selected from antimony, aluminum, titanium, and germanium, and a total content of the metal element is 350 ppm by mass or less.

Item 2. The polyester resin according to Item 1, wherein the polyester resin contains 0.1 to 5 mol% of diethylene glycol with respect to a total of 100 mol% of the polyhydric alcohol component.
Item 3. The polyester resin according to Item 1 or 2, wherein the polyester resin contains 0.001 to 4% by mass of a crystal nucleating agent.
Item 4. The polyester resin according to any one of Items 1 to 3, wherein the polyester resin contains 80 mol% or more of a unit formed from the polyvalent carboxylic acid having the furan backbone and the ethylene glycol.
Item 5. The polyester resin according to any one of Items 1 to 4, wherein a change amount of the reduced viscosity between before and after heat treatment at 280°C for one hour, is 0.17 dl/g or less.
Item 6. The polyester resin according to any one of Items 1 to 5, wherein a melting point of the polyester resin is 200°C or more.
Item 7. A polyester resin pellet formed from the polyester resin according to any one of Items 1 to 6.
Item 8. A bottle formed from the polyester resin according to any one of Items 1 to 6 or the polyester resin pellet according to Item 7.
Item 9. A film formed from the polyester resin according to any one of Items 1 to 6 or the polyester resin pellet according to Item 7.
Item 10. A fiber formed from the polyester resin according to any one of Items 1 to 6 or the polyester resin pellet according to Item 7.
Item 11. A production method for a polyester resin containing a polyvalent carboxylic acid component and a polyhydric alcohol component as constituent components, the production method comprising: a step of performing a polycondensation reaction between the polyvalent carboxylic acid component and the polyhydric alcohol component; and a step of applying a shear stress to a molten composition of a reaction product obtained through the step of performing a polycondensation reaction, wherein the polyvalent carboxylic acid component contains a polyvalent carboxylic acid component having a furan backbone, and the polyhydric alcohol component contains ethylene glycol.
Item 12. The production method for the polyester resin according to Item 11, wherein the step of applying a shear stress includes applying a shear stress of 0.25 MPa or more.
Item 13. The production method for the polyester resin according to Item 11 or 12, wherein the step of applying a shear stress includes applying a shear stress by a twin-screw extruder.
Item 14. A production method for a polyester resin pellet, the production method comprising: a step of extruding the polyester resin obtained through the production method according to any one of Items 11 to 13 in a molten state; a step of cooling the extruded polyester resin; and a step of cutting the cooled polyester resin.

Item 15. A production method for a polyester resin pellet, the production method comprising a step of further performing solid-state polymerization of the polyester resin pellet obtained through the production method according to Item 14.

EFFECTS OF THE INVENTION

The polyester resin of the present invention has a high crystallization rate, and thus can solve problems in terms of production such as blocking of the resin and the problem of bleed-out. In addition, the polyester resin of the present invention has a high molecular weight and favorable thermal stability, and thus makes it possible to provide a polyester resin having a furan backbone, the polyester resin allowing suppression of pyrolysis during processing and having a high strength.

Therefore, the polyester resin of the present invention can be suitably used as a material for various molded products such as films, fibers, beverage bottles, and molded products for optical purposes.

BRIEF DESCRIPTION OF THE DRAWING

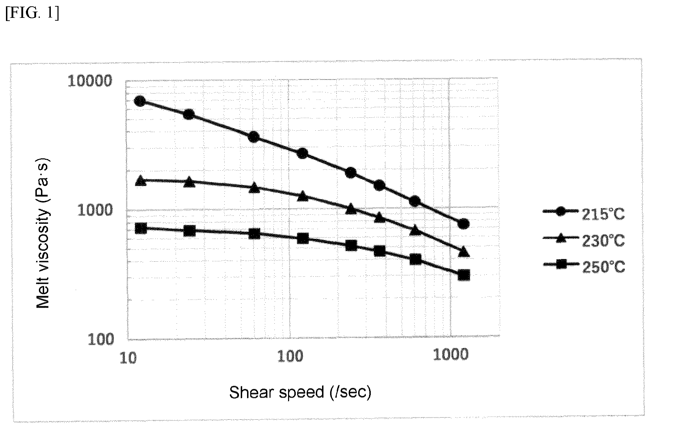

[FIG. 1] FIG. 1 shows a graph having a horizontal axis indicating shear speed [sec$^{-1}$] and having a vertical axis indicating melt viscosity [Pa·s], regarding Example 1.

DESCRIPTION OF EMBODIMENTS

Hereinafter, representative embodiments for carrying out the present invention will be specifically described, but the present invention is not limited to the following embodiments unless deviation from the gist of the present invention occurs.

The polyester resin of the present invention is a polyester resin containing a polyvalent carboxylic acid component and a polyhydric alcohol component as constituent components. The polyester resin contains a polyvalent carboxylic acid having a furan backbone as the polyvalent carboxylic acid component, and contains ethylene glycol as the polyhydric alcohol component. The polyester resin of the present invention preferably contains 80 mol% or more of a unit formed from the polyvalent carboxylic acid having the furan backbone and the ethylene glycol, more preferably contains 85 mol% or more of the unit, further preferably contains 90 mol% or more of the unit, particularly preferably contains 95 mol% or more of the unit, and may contain 100 mol% of the unit.

The polyester resin of the present invention contains a polyvalent carboxylic acid having a furan backbone as the polyvalent carboxylic acid component. Examples of the furan backbone include furan and substituted furan substances (i.e., substances each obtained by substituting one or two hydrogen atoms of furan with a substituent; the substituent does not include any carboxy group). Examples of the substituent to be introduced to obtain a substituted furan substance include alkyl groups having 1 to 10 carbon atoms, aromatic groups having 6 to 18 carbon atoms, halogens, and alkoxy groups having 1 to 10 carbon atoms. The furan backbone is preferably a substituted furan substance obtained through substitution with an alkyl group having 1 to 4 carbon atoms or unsubstituted furan, and is more preferably unsubstituted furan.

The polyvalent carboxylic acid component having the furan backbone is preferably a furandicarboxylic acid having two carboxy groups. Examples of the furandicarboxylic acid include furandicarboxylic acids each having carboxy groups that can react with other monomers and that are located at 2-position and 3-position, 2-position and 4-position, 2-position and 5-position, or 3-position and 4-position of the furan ring. Among these furandicarboxylic acids, in particular, furan-2,5-dicarboxylic acid which is a furandicarboxylic acid having carboxy groups at 2-position and 5-position is more preferable in terms of heat resistance. As raw material monomers for producing the polyester resin, the furandicarboxylic acid and a derivative thereof are usable. Examples of the derivative include alkyl esters having 1 to 4 carbon atoms. Among these alkyl esters, methyl ester, ethyl ester, n-propyl ester, isopropyl ester, and the like are preferable, and methyl ester is more preferable. These types of substances may be used singly, or two or more of these types of substances may be mixed and used.

The polyvalent carboxylic acid component having the furan backbone and composing the polyester resin of the present invention may be a petroleum-derived raw material or a biomass-derived raw material, but use of a biomass-derived raw material is more preferable from the viewpoint of environmental issues.

The proportion of the polyvalent carboxylic acid component having the furan backbone to 100 mol% of the entire polyvalent carboxylic acid component composing the polyester resin is not particularly limited, but is usually preferably 95 mol% or more, more preferably 96 mol% or more, and further preferably 97 mol% or more, and may be 98 mol% or more or may be 99 mol% or more. An embodiment in which the polyvalent carboxylic acid component is composed only of the polyvalent carboxylic acid component having the furan backbone is also preferable.

The polyester resin of the present invention may contain an aliphatic polyvalent carboxylic acid component as the polyvalent carboxylic acid component. As the aliphatic polyvalent carboxylic acid component, an aliphatic dicarboxylic acid having two carboxy groups is preferable. Examples of the aliphatic dicarboxylic acid can include aliphatic dicarboxylic acids such as succinic acid, adipic acid, azelaic acid, sebacic acid, dodecanedioic acid, and dimer acid. Among these aliphatic dicarboxylic acids, an aliphatic dicarboxylic acid having 2 to 12 carbon atoms is preferable.

The aliphatic polyvalent carboxylic acid component may be a saturated aliphatic dicarboxylic acid or an unsaturated dicarboxylic acid, but is preferably a saturated aliphatic dicarboxylic acid.

The aliphatic polyvalent carboxylic acid component may be a straight-chain aliphatic dicarboxylic acid or a branched aliphatic dicarboxylic acid, but is preferably a straight-chain aliphatic dicarboxylic acid. As raw material monomers for producing the polyester resin, the aliphatic dicarboxylic acid and a derivative thereof are usable. The derivative is the same as described above.

The aliphatic polyvalent carboxylic acid component is preferably a straight-chain saturated aliphatic dicarboxylic acid having 2 to 12 carbon atoms, more preferably a straight-chain saturated aliphatic dicarboxylic acid having 2 to 10 carbon atoms, and further preferably a straight-chain saturated aliphatic dicarboxylic acid having 3 to 7 carbon atoms.

The amount of the aliphatic polyvalent carboxylic acid component with respect to 100 mol% of the entire polyvalent carboxylic acid component composing the polyester resin is preferably 5 mol% or less, more preferably 4 mol% or less, and further preferably 3 mol% or less. The aliphatic polyvalent carboxylic acid component does not have to be contained, and meanwhile, in a case where the aliphatic polyvalent carboxylic acid component is contained, the amount thereof is preferably 0.1 mol% or more, more preferably 0.7 mol% or more, and further preferably 1.5 mol% or more.

In a case where the polyester resin of the present invention contains the aliphatic polyvalent carboxylic acid within the above range, decrease in heat resistance due to the copolymerization component can be suppressed, and the crystallization rate can be improved. The reason for this advantage is not clear, but is considered to be because, by containing such a flexible aliphatic polyvalent carboxylic acid component within the above optimum range, the molecular mobility of the polyester resin increases and the molecules are oriented so as to enable formation of crystal. It is considered that, when the copolymerization amount of the aliphatic polyvalent carboxylic acid component is more than the upper limit of the above range, the molecular mobility increases, but the chain length of a block formed from the polyvalent carboxylic acid component having the furan backbone and the polyhydric alcohol component is shortened, and it becomes difficult to form crystal.

The aliphatic polyvalent carboxylic acid component composing the polyester resin of the present invention may be a petroleum-derived raw material or a biomass-derived raw material, but use of a biomass-derived raw material is more preferable from the viewpoint of environmental issues.

The polyester resin of the present invention may contain, within such a range as not to impair the advantageous effects of the present invention, another carboxylic acid component other than the polyvalent carboxylic acid component having the furan backbone and the aliphatic polyvalent carboxylic acid component as the polyvalent carboxylic acid component. The other carboxylic acid component may be a bivalent carboxylic acid component or a trivalent or higher polyvalent carboxylic acid component. Examples of the other carboxylic acid component include: aromatic polyvalent carboxylic acids and esters thereof; and alicyclic polyvalent carboxylic acids and esters thereof. The other carboxylic acid component may be one type of carboxylic acid component included among these examples or a mixture of two or more types of carboxylic acid components included among these examples.

Examples of the aromatic polyvalent carboxylic acids include terephthalic acid, isophthalic acid, orthophthalic acid, naphthalenedicarboxylic acid, biphenyldicarboxylic acid, diphenic acid, 5-hydroxyisophthalic acid, trimellitic acid, pyromellitic acid, methylcyclohexene tricarboxylic acid, oxydiphthalic dianhydride (ODPA), 3,3',4,4'-benzophenone tetracarboxylic dianhydride (BTDA), 3,3',4,4'-diphenyltetracarboxylic dianhydride (BPDA), 3,3',4,4'-diphenylsulfone tetracarboxylic dianhydride (DSDA), 4,4'-(hexafluoroisopropylidene)diphthalic dianhydride (6FDA), and 2,2'-bis[(dicarboxyphenoxy)phenyl]propane dianhydride (BSAA). Other examples of the aromatic polyvalent carboxylic acids can include aromatic dicarboxylic acids having sulfonic acid groups or sulfonic acid salt groups such as sulfoterephthalic acid, 5-sulfoisophthalic acid, 4-sulfophthalic acid, 4-sulfonaphthalene-2,7-dicarboxylic acid, 5-(4-sulfophenoxy)isophthalic acid, sulfoterephthalic acid, and metal salts and ammonium salts thereof.

Examples of the alicyclic polyvalent carboxylic acids can include alicyclic dicarboxylic acids such as 1,4-cyclohexanedicarboxylic acid, 1,3-cyclohexanedicarboxylic acid, 1,2-cyclohexanedicarboxylic acid, and acid anhydrides thereof. One of these types of other carboxylic acid components may be used singly, or two or more of these types of other carboxylic acid components may be mixed and used. The other carboxylic acid component may be modified with an ester.

The total amount of the above other carboxylic acid component with respect to 100 mol% of the entire polyvalent carboxylic acid component composing the polyester resin of the present invention is preferably 3 mol% or less, more preferably 2 mol% or less, and further preferably 1 mol% or less. An embodiment in which the polyvalent carboxylic acid component does not contain the above other carboxylic acid component, i.e., is composed only of the polyvalent carboxylic acid component having the furan backbone and the aliphatic polyvalent carboxylic acid component, is also preferable. An embodiment in which the polyvalent carboxylic acid component is composed only of the polyvalent carboxylic acid component having the furan backbone is also preferable.

Ethylene glycol is contained as the polyhydric alcohol component composing the polyester resin of the present invention. The proportion of the ethylene glycol in the entire polyhydric alcohol component composing the polyester resin of the present invention is not particularly limited, but is usually preferably 80 mol% or more, more preferably 85 mol% or more, further preferably 90 mol% or more, and particularly preferably 95 mol% or more. An embodiment in which the polyhydric alcohol component is composed only of ethylene glycol is also preferable. Meanwhile, the proportion is also preferably 99.5 mol% or less, more preferably 99 mol% or less, and further preferably 98 mol% or less.

The ethylene glycol composing the polyester resin of the present invention may be a petroleum-derived raw material or a biomass-derived raw material, but use of a biomass-derived raw material is preferable from the viewpoint of environmental issues.

The polyester resin of the present invention may contain diethylene glycol as the polyhydric alcohol component. The proportion of the diethylene glycol to 100 mol% of the entire polyhydric alcohol component composing the polyester resin of the present invention is preferably 5 mol% or less, more preferably 3 mol% or less, and further preferably 2 mol% or less. Meanwhile, the proportion of the diethylene glycol to 100 mol% of the entire polyhydric alcohol component is preferably 0.1 mol% or more, more preferably 0.5 mol% or more, and further preferably 1 mol% or more.

In a case where the polyester resin of the present invention contains diethylene glycol as the polyhydric alcohol component, the diethylene glycol may be a byproduct obtained through condensation of the ethylene glycol or may be set as a raw material. In order to decrease the amount of the diethylene glycol as a byproduct, a basic compound may be added as a diethylene glycol inhibitor, for example. Examples of the basic compound include: tertiary amines such as triethylamine and tri-n-butylamine; and quaternary ammonium salts such as tetraethylammonium hydroxide.

The polyester resin of the present invention may contain a polyhydric alcohol component other than the ethylene glycol and the diethylene glycol, and this polyhydric alcohol component may be a dihydric alcohol component or a trihydric or higher polyhydric alcohol component. The polyhydric alcohol component other than the ethylene glycol and the diethylene glycol is preferably selected from aliphatic polyhydric alcohols, alicyclic polyhydric alcohols, ether-bond-containing polyhydric alcohols, and aromatic-structure-containing polyhydric alcohols and may be one of these types of alcohols or a mixture of two or more of these types of alcohols. Examples of the aliphatic polyhydric alcohols can include 1,2-propylene glycol, 1,3-propanediol, 1,4-butanediol, 1,5-pentanediol, 2-methyl-1,3-propanediol, neopentyl glycol, 1,6-hexanediol, 3-methyl-1,5-pentanediol, 1,7-heptanediol, 1,8-octanediol, 1,9-nonanediol, 2-ethyl-2-butylpropanediol, hydroxypivalic acid neopentyl glycol ester, dimethylolheptane, 2,2,4-trimethyl-1,3-pentanediol, glycerin, pentaerythritol, trimethylolethane, trimethylolpentane, and trimethylolpropane.

Examples of the alicyclic polyhydric alcohols can include 1,4-cyclohexanediol, 1,4-cyclohexanedimethanol, tricyclodecanediol, tricyclodecanedimethylol, spiroglycol, hydrogenated bisphenol A, and ethylene oxide adducts and propylene oxide adducts of hydrogenated bisphenol A.

Examples of the ether-bond-containing polyhydric alcohols that are usable as necessary include diethylene glycol, triethylene glycol, dipropylene glycol, polyethylene glycol, polypropylene glycol, polytetramethylene glycol, neopentyl glycol ethylene oxide adducts, and neopentyl glycol propylene oxide adducts.

Examples of the aromatic-structure-containing polyhydric alcohols can include para-xylene glycol, meta-xylene glycol, ortho-xylene glycol, 1,4-phenylene glycol, ethylene oxide adducts of 1,4-phenylene glycol, bisphenol A, and glycols each obtained by adding one to several moles of ethylene oxide or propylene oxide to the two phenolic hydroxy groups of a bisphenol, such as ethylene oxide adducts and propylene oxide adducts of bisphenol A. These types of polyhydric alcohols may be used singly, or two or more of these types of polyhydric alcohols may be mixed and used.

The polyester resin of the present invention contains at least one type of metal element selected from antimony, aluminum, titanium, and germanium, and a total content of the metal element is 350 ppm by mass or less. The total content is preferably 300 ppm by mass or less and more preferably 250 ppm by mass or less. In this case, the polyester resin of the present invention has excellent thermal stability. If a large amount of the metal element is contained in the polyester resin, a pyrolysis reaction of the polyester resin is promoted at high temperature and may become a factor for causing decrease in reduced viscosity, coloring of the resin, or thermal degradation of the resin.

The polyester resin of the present invention may contain a crystal nucleating agent. The crystal nucleating agent may be an inorganic material or an organic material. Examples of the inorganic material include talc, boron nitride, silica, and layered silicate, and examples of the organic material include ester oligomer, polyethylene wax, and polypropylene wax. Preferable examples of the crystal nucleating agent include talc and ester oligomer. These types of crystal nucleating agents may be used singly, or two or more of these types of crystal nucleating agents may be mixed and used. When measured through differential scanning calorimetry (DSC) at a heating rate of 10°C/minute, a cold crystallization peak of the polyester resin of the present invention during first heating is within a range of 145 to 185°C and a heat generation amount of the polyester resin of the present invention during the first heating is 3 J/g or more. By such a polyester resin containing the crystal nucleating agent, the crystallization rate can be further increased. Also, an embodiment in which the polyester resin contains the crystal nucleating agent and has a history of having received a high shear stress in a molten state is also one of preferable embodiments.

In a case where the crystal nucleating agent is contained, a preferable content of the crystal nucleating agent is 0.001% by mass or more, more preferably 0.01% by mass or more, and further preferably 0.1% by mass or more with respect to the polyester resin. Meanwhile, the upper limit of the content of the crystal nucleating agent is 4% by mass, more preferably 3% by mass, further preferably 2% by mass, and most preferably 1% by mass. If the content of the crystal nucleating agent is less than the above lower limit, a crystallization promotion effect cannot be sufficiently obtained. Meanwhile, if the content is more than the above upper limit, mechanical properties of the polyester resin may decrease, and the flexibility thereof may be impaired.

In a case where the crystal nucleating agent is an inorganic material, a smaller particle diameter of the inorganic material is more preferable from the viewpoint of the effect of the nucleating agent. The crystal nucleating agent preferably has an average particle diameter of 5 $\mu$m or less, more preferably 3 $\mu$m or less, further preferably 1 $\mu$m or less, and most preferably 0.5 $\mu$m or less. Meanwhile, the lower limit of the average particle diameter of the crystal nucleating agent is preferably 0.1 $\mu$m.

A production method for the polyester resin of the present invention preferably includes: a step of performing a polycondensation reaction between the polyvalent carboxylic acid component containing the polyvalent carboxylic acid having the furan backbone and the polyhydric alcohol component containing the ethylene glycol; and a step of applying a shear stress to a molten composition of a reaction product obtained through the step of performing a polycondensation reaction.

The production method for the polyester resin of the present invention can be performed as a method including publicly-known steps, except that: the polyvalent carboxylic acid having the furan backbone is used as the polyvalent carboxylic acid component, and the ethylene glycol is used as the polyhydric alcohol component; and the method includes the step of performing a polycondensation reaction.

In the production method for the polyester resin of the present invention, the molar ratio between the polyvalent carboxylic acid component containing the polyvalent carboxylic acid having the furan backbone and the polyhydric alcohol component containing the ethylene glycol at the time of setting is not particularly limited as long as the polyester resin of the present invention can be produced. However, from the viewpoint of easily obtaining a polyester resin having a high molecular weight, the amount of a diol with respect to 1.0 mole of a dicarboxylic acid component is preferably 0.9 moles or more, more preferably 1.0 mole or more, and further preferably 1.2 moles or more. Meanwhile, the amount is preferably 4.0 moles or less, more preferably 3.0 moles or less, and further preferably 2.5 moles or less.

The production method for the polyester resin of the present invention includes the step of performing a polycondensation reaction. A polymerization catalyst is preferably used at the time of performing the polycondensation for obtaining the polyester resin of the present invention. The timing of adding the catalyst, the amount thereof, and the like may be adjusted as appropriate. Specifically, the polymerization catalyst may be added at the time of setting the raw materials or may be added in the course of a production process. Alternatively, the polymerization catalyst may be added both at the time of setting the raw materials and in the course of the production process.

A method for setting the catalyst may include setting the polymerization catalyst alone or setting the polymerization catalyst in a state of having been dissolved or dispersed in water, an alcohol, or a glycol such as ethylene glycol.

Examples of the polymerization catalyst can include titanium compounds (tetra-n-butyl titanate, tetraisopropyl titanate, titanium oxyacetylacetonate, and the like), antimony compounds (tributoxy antimony, antimony trioxide, and the like), germanium compounds (tetra-n-butoxy germanium, germanium oxide, and the like), zinc compounds (zinc acetate and the like), and aluminum compounds (aluminum acetate, aluminum acetylacetate, and the like). In a case where an aluminum compound is used as the polymerization catalyst, a phosphorus compound is preferably used in combination as a co-catalyst. The above types of polymerization catalysts may be used singly, or two or more of the above types of polymerization catalysts may be used in combination. From the viewpoint of reactivity in the polycondensation, antimony compounds, aluminum compounds, titanium compounds, and germanium compounds are preferable, and, in consideration of influence on coloring of the resin as well, aluminum compounds and germanium compounds are more preferable.

The phosphorus compound may be added in the production process for the polyester resin. The phosphorus compound is not particularly limited, but phosphonic acid-based compounds and phosphinic acid-based compounds are preferable since use of these compounds leads to a significant effect of improving catalyst activity. Out of these compounds, phosphonic acid-based compounds are more preferable since use of these compounds leads to a particularly significant effect of improving catalyst activity.

The usage amount of the polymerization catalyst is preferably large from the viewpoint of increasing the speed of the polycondensation reaction and increasing production efficiency. Meanwhile, if a large amount of metal element is contained in the polyester resin, a pyrolysis reaction of the polyester is promoted at high temperature and may become a factor for causing coloring of the resin or thermal degradation of the resin.

Even if the polymerization catalyst is placed in a reduced-pressure environment during polycondensation for obtaining the polyester resin, almost 100% of the usage amount of the catalyst having been initially added to the system remains in the copolymerized polyester resin produced through the polycondensation. That is, the amount of the polymerization catalyst is substantially unchanged between before and after the polycondensation. Thus, specifically, the addition amount of the polymerization catalyst with respect to the polyester resin to be generated is 1 ppm by mass or more, more preferably 3 ppm by mass or more, and further preferably 5 ppm by mass or more. Meanwhile, the addition amount is preferably 350 ppm by mass or less, more preferably 300 ppm by mass or less, and further preferably 250 ppm by mass or less.

In the production method for the polyester resin of the present invention, the polyester resin is preferably produced by using a polymerization catalyst containing an aluminum compound and a phosphorus compound from the viewpoint of thermal stability of the polyester resin.

In a case where the polyester resin of the present invention contains a phosphorus compound, the phosphorus element content is preferably 20 to 250 ppm by mass, more preferably 30 to 200 ppm by mass, further preferably 40 to 150 ppm by mass, and particularly preferably 50 to 120 ppm by mass. If the phosphorus element content is less than 20 ppm by mass, polymerization activity may decrease, or the amount of foreign matter may increase. Meanwhile, if the phosphorus element content is more than 250 ppm by mass, cost for the catalyst increases, and furthermore, polymerization activity may decrease.

When the phosphorus compound that functions as a catalyst together with the aluminum compound is placed in a reduced-pressure environment during polycondensation for obtaining the copolymerized polyester resin, a portion (about 10 to 40%) of the usage amount of the phosphorus compound having been initially added as a catalyst to the system is typically removed to the outside of the system. The proportion of the portion to be removed varies according to: the addition molar ratio of the phosphorus element to aluminum element; the basicity and the acidity of an aluminum compound-containing glycol solution and a phosphorus compound-containing glycol solution to be added; a method for adding the aluminum compound-containing solution or the phosphorus compound-containing solution (whether to add these solutions as one liquid or separately); and the like. Therefore, the addition amount of the phosphorus element with respect to the polyester resin to be generated is preferably 20 to 250 ppm by mass, more preferably 30 to 200 ppm by mass, and further preferably 40 to 150 ppm by mass.

In the polyester resin of the present invention, the content ratio of the phosphorus element to the aluminum element on a molar basis is preferably 1.1 to 2.8, more preferably 1.3 to 2.6, and further preferably 1.5 to 2.5. As described above, the aluminum element and the phosphorus element in the polyester resin are respectively derived from the aluminum compound and the phosphorus compound used as polymerization catalysts for the polyester resin. By using the aluminum compound and the phosphorus compound in combination at a specific ratio, a complex having catalyst activity is functionally formed in the polycondensation system, and sufficient polymerization activity can be exhibited. If the content ratio of the phosphorus element to the aluminum element is less than 1.1, thermal stability and thermal oxidation stability may decrease, and the amount of foreign matter may increase. Meanwhile, if the content ratio of the phosphorus element to the aluminum element is more than 2.8, the addition amount of the phosphorus compound becomes excessively large, and thus cost for the catalyst increases.

As described above, when the phosphorus compound is placed in a reduced-pressure environment during polycondensation for obtaining the polyester resin, a portion (about 10 to 40%) of the usage amount of the phosphorus compound having been initially added as a catalyst to the system is typically removed to the outside of the system. Thus, the addition molar ratio of the phosphorus element to the aluminum element is preferably 1.3 to 2.5, more preferably 1.5 to 2.3, and further preferably 1.7 to 2.2.

Examples of a method for an esterification reaction in the production method for the polyester resin of the present invention include a direct esterification method including directly reacting the polyvalent carboxylic acid having the furan backbone, the ethylene glycol, and, as necessary, another copolymerization component, distilling water, performing an esterification reaction, and subsequently performing a polycondensation reaction under a normal pressure or decreased pressure. Examples of a method for a transesterification reaction in the production method for the polyester resin of the present invention include a production method including reacting dimethyl furan-2,5-dicarboxylate, the ethylene glycol, and, as necessary, another copolymerization component, distilling methyl alcohol, performing a transesterification reaction, and subsequently performing a polycondensation reaction under a normal pressure or decreased pressure.

As conditions such as the temperature, the time, and the pressure in each of the esterification reaction and the transesterification reaction, conditions within ranges in a conventionally known polyester resin production method may be employed. The reaction temperature is usually 100°C or more and preferably 120°C or more. Meanwhile, the reaction temperature is usually 300°C or less, preferably 290°C or less, and further preferably 280°C or less. By setting the reaction temperature to be within the ranges, the reaction can be caused to efficiently progress. The reaction atmosphere is usually set to an atmosphere of an inert gas such as nitrogen or argon. The reaction pressure is usually -0.05 MPa to 0.3 MPa at a gauge pressure. The reaction time is usually one hour or more, and meanwhile, usually 10 hours or less and preferably eight hours or less.

As conditions such as the temperature, the time, and the pressure in the polycondensation reaction, conditions within ranges in a conventionally known polyester production method may be employed. The polycondensation reaction temperature is preferably 230°C or more, more preferably 235°C or more, and further preferably 240°C or more.

Meanwhile, the polycondensation reaction temperature is preferably 300°C or less, more preferably 290°C or less, and further preferably 280°C or less. The absolute pressure is preferably 150 Pa or less, more preferably 100 Pa or less, and further preferably 50 Pa or less. The reaction time is preferably 10 hours or less, more preferably seven hours or less, and further preferably five hours or less. By setting the conditions to be within the ranges, a sufficient polycondensation reaction speed is ensured, pyrolysis, coloring, a side reaction, and the like are suppressed, and a polyester resin having a high molecular weight is obtained.

In any of these methods, the esterification reaction or the transesterification reaction may be performed in one stage or in multiple stages. The polycondensation reaction may be performed in one stage or in multiple stages.

A device for producing the polyester resin of the present invention may be of a batch type or a continuous type.

The production method for the polyester resin of the present invention may include the step of applying a shear stress to a molten composition of a reaction product obtained through the polycondensation reaction.

Examples of the method for the step of applying a shear stress include a method including: supplying a reaction product obtained through the polycondensation reaction between the polyvalent carboxylic acid component containing the polyvalent carboxylic acid having the furan backbone and the polyhydric alcohol component containing the ethylene glycol to a device for applying a shear stress; and applying a shear stress to a molten composition of the reaction product.

As the device for applying a shear stress, a resin kneading device such as a twin-screw extruder or a gear pump, a passage device such as a die, a compression device such as a heat press or a roll press, or the like is usable. Among these devices, a twin-screw extruder is preferably used.

The step of applying a shear stress preferably includes applying a shear stress of 0.25 MPa or more. The shear stress is more preferably 0.35 MPa or more, further preferably 0.45 MPa or more, and particularly preferably 0.55 MPa or more. It is considered that, when the shear stress is not less than this value, a sufficient shear stress can be applied to the resin, and the molecules are easily oriented so as to enable formation of crystal.

Here, a shear stress $\tau$ is expressed with the following formula (1), where $\gamma$ represents a shear speed, and $\mu$ represents a melt viscosity.

$$\tau = \mu\gamma \quad \text{formula (1)}$$

In the case of, for example, a twin-screw extruder, the shear speed $\gamma$ is expressed with the following formula (2), where D represents a screw outer diameter, N represents a screw rotation speed, and h represents a tip clearance.

$$\gamma = \pi DN/h \quad \text{formula (2)}$$

In a suitable embodiment, when the shear stress is applied, the melt viscosity of the composition is preferably 300 to 3000 Pa·s and more preferably 600 to 2000 Pa·s, and the extrusion temperature is preferably 180°C or more and more preferably 190°C or more. The shear speed is preferably 1500 sec$^{-1}$ or less and more preferably 1000 sec$^{-1}$ or less, and it is preferable to perform kneading at the above shear speed and extrude the polyester resin.

It is considered that, by the production method for the polyester resin of the present invention including the step of applying a shear stress to a molten composition of a reaction product obtained through the step of performing a polycondensation reaction, the molecules are easily oriented so as to enable formation of crystal, and the polyester resin of the present invention has a high crystallization rate. In addition, a polyester resin that can be obtained through the production method for the polyester resin of the present invention is a polyester resin in which, when measured through differential scanning calorimetry (DSC) at a heating rate of 10°C/minute, a cold crystallization peak of the polyester resin during first heating is within a range of 145 to 185°C and a heat generation amount of the polyester resin during the first heating is 3 J/g or more. Therefore, blocking of the polyester resin can be suppressed, and operation efficiency can be improved.

In the production method for the polyester resin of the present invention, a method for supplying the reaction product obtained through the step of performing a polycondensation reaction to the device for applying a shear stress may include, for example, directly connecting a polymerization device and the device for applying a shear stress. In this case, the reaction product obtained through the step of performing a polycondensation reaction can be transferred while being kept in a molten state so as to be supplied to the device for applying a shear stress, whereby continuous production can be performed. Alternatively, the reaction product may be ejected in the form of chips from the polymerization device once before being supplied to the device for applying a shear stress. From the viewpoint of production efficiency, it is preferable to directly connect the polymerization device and the device for applying a shear stress.

The polyester resin obtained through the step of applying a shear stress is preferably made into a polyester resin pellet. The polyester resin obtained through the production process including the step of applying a shear stress has a high crystallization rate and can be maintained in a state where the molecules are oriented, whereby crystallization can be easily promoted. Therefore, blocking of the resin during drying and solid-state polymerization steps can be prevented, and excellent stability in supply to a molding machine and excellent operation stability in the drying and solid-state polymerization steps can be obtained. In addition, the heating rate during the drying and the solid-state polymerization can be increased, whereby the drying and the solid-state polymerization can be efficiently performed.

As a production method for the polyester resin pellet of the present invention, a conventionally known pellet production method may be employed. For example, the polyester resin obtained through the above step of applying a shear stress may be extruded in the form of a strand from the device, and, while the extruded polyester resin is being cooled with water or the like, the cooled polyester resin may be cut with a cutter.

The polyester resin obtained through the step of applying a shear stress may be further additionally polymerized, as necessary, through a solid-state polymerization method in order to increase the molecular weight. In this case, the molecular weight of the polyester resin after the step of performing a polycondensation reaction, can be further increased.

The aforementioned solid-state polymerization method is not particularly limited, and examples of the method include a method including heating, in an inert gas atmosphere or under a decreased pressure, the polyester resin obtained through the above step of applying a shear stress or a polyester resin pellet obtained through the above production method for the polyester resin pellet. The reaction may be performed in a state where the pellet or powder of the polyester resin is left at rest or may be performed in a state where the pellet or powder is being stirred. In the case of performing the stirring, the stirring may be performed with stirring blades provided to a reaction container or may be performed by moving the reaction container.

The solid-state polymerization is preferably performed at a reaction temperature not more than a melting point. The reaction temperature is preferably 180°C or more and further preferably 190°C or more. Meanwhile, the reaction temperature is preferably 260°C or less and further preferably 250°C or less. The heating time is preferably one hour or more and further preferably three hours or more. Meanwhile, from the viewpoint of making it less likely for coloring to occur, the heating time is preferably 50 hours or less, more preferably 40 hours or less, and further preferably 30 hours or less.

Through the solid-state polymerization step, the molecular weight of the polyester resin of the present invention can be increased, and a molded product having a high strength can be acquired.

Measurement of a cold crystallization peak and measurement of a melting heat amount with use of a differential scanning calorimeter (DSC) will be described.

In general, a DSC steadily changes the temperature of a sample portion formed from a sample and a reference substance and measures the difference between the temperatures of the sample and the reference substance. At this time, analysis is performed regarding transitions such as melting, glass transition, crystallization, and curing of the sample, and furthermore, a thermal history of the sample, whereby various items such as specific heat and purity can be measured.

In the measurement with the DSC, during the first heating, as the temperature is gradually increased from room temperature (e.g., 20°C), the glass transition temperature is reached and a baseline shift occurs. When the temperature is further increased, a cold crystallization peak as an exothermic peak derived from crystallization of the polymer is obtained. In general, the crystallization behavior of a polymer is evaluated based on a cold crystallization peak temperature and a heat generation amount (cold crystallization heat amount), and thus the cold crystallization peak temperature and the heat generation amount serve as indexes for the crystallization rate of the polymer. In particular, a crystallization rate including influences of the production process regarding pretreatment for the polymer or a thermal history is obtained during the first heating. That is, a high crystallization rate indicates that, during the first heating, the cold crystallization peak temperature is low and the cold crystallization heat generation amount is large. When the temperature is further increased, the polymer starts to melt, and heat absorption occurs. With a melting peak temperature being regarded as a melting point, when the temperature is increased to the melting point or more so as to completely melt the polymer, a heat absorption amount is obtained. This heat absorption amount indicates the melting heat amount of the polymer. The cold crystallization heat amount is the amount of crystal newly generated during the heating, and the difference between the melting heat amount and the cold crystallization heat amount corresponds to the amount of crystal having been possessed by the polymer before the first heating is started. For example, in a case where the cold crystallization heat amount has a value of 10 J/g and the melting heat amount has a value of 30 J/g, it is found that a polymer having crystal corresponding to 20 J/g which is the difference therebetween has been subjected to the measurement with the DSC. Thereafter, the temperature is decreased to room temperature to perform cooling. In this cooling process, when the cooling rate is low, the molten polymer starts to crystallize and generates heat, and re-crystallization can be confirmed. At this time, crystal in original arrangement of the macromolecular polymer is obtained. Meanwhile, when the cooling rate is high, an amorphous polymer can be obtained without occurrence of re-crystallization.

In second heating, an amorphous polymer obtained by rapidly cooling the polymer in a state of having been melted through the first heating is gradually heated again from room temperature to the melting point or more. In the course of this heating, a cold crystallization peak is obtained again. In general, a cold crystallization heat generation amount obtained at this time is an original crystallization rate of the polymer excluding the influences of the production process regarding the pretreatment for the polymer or the thermal history. When the temperature is further increased, the polymer is melted again.

The cold crystallization peak of the polyester resin of the present invention refers to a cold crystallization peak of the polyester resin during the first heating measured through differential scanning calorimetry (DSC) at a heating rate of 10°C/minute. The cold crystallization peak temperature during the first heating is within a range of 145 to 185°C. The cold crystallization peak temperature is preferably 150 to 183°C and more preferably 155 to 180°C. The cold crystallization heat generation amount of the polyester resin of the present invention during the first heating is 3 J/g or more. The cold crystallization heat generation amount is preferably 5 J/g or more, more preferably 7 J/g or more, and further preferably 9 J/g or more. In this case, the polyester resin of the present invention has a sufficient crystallization rate. Therefore, blocking of the resin can be suppressed, and productivity for a molded product can be improved. The upper limit of the cold crystallization heat generation amount of the polyester resin of the present invention during the first heating is not particularly limited, and the cold crystallization heat generation amount is, for example, 50 J/g or less and preferably 40 J/g or less.

The melting heat amount of the polyester resin of the present invention measured through differential scanning calorimetry (DSC) at a heating rate of 10°C/minute is preferably 6 J/g or more and more preferably 8 J/g or more. The upper limit of the melting heat amount is not particularly limited, and the melting heat amount is, for example, 40 J/g or less and preferably 30 J/g or less.

The melting point of the polyester resin of the present invention is preferably 200°C or more and more preferably 205°C or more from the viewpoint of increasing the mechanical strength of a molded product to be obtained from the polyester resin. In addition, in the case of performing the solid-state polymerization step, the treatment temperature can be set to be high, whereby productivity can be improved. The upper limit of the melting point is not particularly limited, and the melting point is, for example, 240°C or less and preferably 230°C or less.

Regarding the lower limit of a reduced viscosity of the polyester resin of the present invention, the reduced viscosity is 0.50 dl/g or more. The reduced viscosity is preferably 0.55 dl/g or more and further preferably 0.60 dl/g or more. Meanwhile, regarding the upper limit of the reduced viscosity, the reduced viscosity is preferably 1.20 dl/g or less, more preferably 1.10 dl/g or less, further preferably 1.00 dl/g or less, particularly preferably 0.90 dl/g or less, and most preferably 0.80 dl/g or less. By having a reduced viscosity not less than the above lower limit and having a sufficient crystallization rate, the polyester resin of the present invention has high strength and excellent thermal stability, and enables improvement of productivity.

In the polyester resin of the present invention, a change amount of the reduced viscosity between before and after a pyrolysis test, is preferably small. Specifically, a change amount of the reduced viscosity after heat treatment at 280°C for one hour, is preferably 0.17 dl/g or less, more preferably 0.15 dl/g or less, and further preferably 0.13 dl/g or less. If the change amount of the reduced viscosity is more than the upper limit of the above range, coloring of the resin or thermal degradation of the resin may occur. The lower limit of the change amount of the reduced viscosity is not particularly limited, and the change amount is, for example, 0.03 dl/g or more and preferably 0.05 dl/g or more.

An acid value of the polyester resin of the present invention after the step of performing a polycondensation reaction, is preferably 100 eq/ton or less, more preferably 50 eq/ton or less, and further preferably 25 eq/ton or less. In this case, an acid value of the polyester resin in the subsequent step can be prevented from becoming excessively high. As a result, the thermal stability of the polyester resin can be prevented from deteriorating, coloring of the polyester resin and decrease in the molecular weight of the polyester resin during processing can be prevented, and a molded product having a high strength can be acquired. The lower limit of the acid value after the step of performing a polycondensation reaction, is not particularly limited, and the acid value is, for example, 3 eq/ton or more and preferably 7 eq/ton or more.

Any type of antioxidant may be contained in the copolymerized polyester resin of the present invention, as appropriate. A method for blending the antioxidant in the polyester resin is not particularly limited, and examples of the method include: a method of adding the antioxidant at the time of setting the raw materials for producing the polyester resin; a method of adding the antioxidant during the production process for the polyester resin; and a method of dry-blending the antioxidant with the polyester resin after production. Examples of the antioxidant can include publicly-known antioxidants such as a phenol-based antioxidant, a phosphorus-based antioxidant, an amine-based antioxidant, a sulfur-based antioxidant, a nitro compound-based antioxidant, and an inorganic compound-based antioxidant. A phenol-based antioxidant having a comparatively high heat resistance is preferable, and 0.05 parts by mass or more and 0.5 parts by mass or less of the phenol-based antioxidant are preferably contained per 100 parts by mass of the polyester resin that is obtained.

In the polyester resin of the present invention, within such a range as not to impair the characteristics thereof, various additives such as a heat stabilizer, a hydrolysis inhibitor, a flame retardant, an antistatic agent, a release agent, and an ultraviolet absorber may be added in addition to the antioxidant. These additives may be added at the time of setting the raw materials for producing the polyester resin, may be added during the production process for the polyester resin, or may be dry-blended with the polyester resin after production.

The polyester resin of the present invention is preferably in the form of a polyester resin pellet as a form that allows the polyester resin to be easily handled. A molded product can be formed by using the polyester resin pellet. The polyester resin pellet of the present invention has a high crystallization rate, whereby blocking of the resin can be prevented, and excellent stability in supply to a molding machine and excellent operation stability during melt molding can be obtained.

The polyester resin of the present invention can be molded into a bottle, a film, a fiber, or the like through a publicly-known molding method.

The present application claims the benefit of priority to Japanese Patent Application No. 2023-024347 filed on February 20, 2023. The entire contents of the specifications of Japanese Patent Application No. 2023-024347 filed on February 20, 2023 are hereby incorporated by reference.

EXAMPLES

Hereinafter, the present invention will be specifically described by means of examples, but the present invention is not limited to these examples. Each physical property was measured according to the following respective methods.

Measurement of Melt Viscosity ($\mu$)

A melt viscosity in the step of applying a shear stress was measured according to the following method.

With Capilograph 1B manufactured by Toyo Seiki Seisaku-sho, Ltd., a $\varphi$1-mm capillary die having a capillary length of 10 mm and a furnace body diameter of 9.55 mm was used, a cylinder maintained at a predetermined temperature was filled with a dried resin sample (post-polycondensation polyester resin), the resin sample was melted for about one minute, and then a melt viscosity (Pa·s) at a predetermined shear speed was measured.

Shear Speed $\gamma$;

In the step of applying a shear stress, the following twin-screw extruder was used, and a shear speed $\gamma$ was calculated according to the following formula 3.

· KZW15TW-45/60MG-NH (-2200) manufactured by TECHNOVEL CORPORATION
· Screw outer diameter: 15.21 mm
· Clearance: 0.22 mm
Shear speed $\gamma$ (sec$^{-1}$):

$$\gamma = \pi D(N/60)/h \quad \text{(formula 3)}$$

(D: screw outer diameter (mm), N: screw rotation speed (rpm), h: clearance (mm))

Shear Stress (MPa);

A shear stress represented by $\tau$ was calculated according to the following formula 4 by using the aforementioned melt viscosity $\mu$ and the aforementioned shear speed $\gamma$.

$$\text{Shear stress } \tau \text{ (MPa)} = \mu\gamma \quad \text{(formula 4)}$$

Measurement of Reduced Viscosity;

0.10 g of polyester resin was dissolved by using a mixed solvent of phenol/1,1,2,2-tetrachloroethane (6/4 (mass ratio)), and a reduced viscosity was measured at a temperature of 30°C by using an Ubbelohde viscometer and was expressed in dl/g.

Measurement of Change Amount of Reduced Viscosity between Before and After Pyrolysis Test;

5 g of polyester resin was put into a glass container and was dried in a vacuum at 140°C for 16 hours, whereby a dry polyester resin having a moisture content of 150 ppm or less was produced. Thereafter, the glass container was filled with nitrogen, heat treatment was performed for one hour in a salt bath at 280°C, a post-treatment reduced viscosity was measured according to the same method as that described above, and a change amount of the reduced viscosity between before and after the pyrolysis test was calculated according to the following formula.

(Change amount of reduced viscosity between before and after pyrolysis test) = (pre-heat treatment reduced viscosity) - (post-heat treatment reduced viscosity)  (formula 5)

Composition of Polyester Resin;

20 mg of polyester resin was dissolved in 0.6 ml of a mixed solvent of trifluoroacetic acid/deuterated chloroform (15/85 (volume ratio)), and centrifugal separation was performed. Thereafter, the resultant supernatant liquid was collected, H-NMR measurement was performed, and the composition of the polyester resin was identified from an NMR spectrum.

The H-HMR measurement was performed by using the following device under the following conditions.

· Device: Fourier transform nuclear magnetic resonance device (AVANCE NEO 600 manufactured by Bruker Corporation)
· $^1$H resonance frequency: 600.13 MHz
· Lock solvent: deuterated chloroform
· Flip angle: 30°
· Data acquisition time: four seconds
· Delay time: one second
· Measurement temperature: 30°C
· Number of times of integration: 128 times

Contents of Metal Elements in Polyester Resin;

A polyester resin was weighed out into a crucible made of platinum, was carbonized by using an electric stove, and then was incinerated under conditions of eight hours at 550°C in a muffle furnace. The post-incineration sample was dissolved in 1.2-M hydrochloric acid to obtain a sample solution. The prepared sample solution was subjected to measurement under the following conditions, and the concentrations of antimony element, aluminum element, titanium element, and germanium element in the polyester resin were obtained through highfrequency inductively coupled plasma emission spectrometry.

· Device: CIROS-120 manufactured by SPECTRO Analytical Instruments GmbH.
· Plasma output: 1400 W
· Plasma gas: 13.0 L/minute
· Auxiliary gas: 2.0 L/minute
· Nebulizer: cross flow nebulizer
· Chamber: cyclone chamber
· Measurement wavelength: 167.078 nm

Content of Phosphorus Element in Polyester Resin;

A polyester resin was subjected to wet decomposition with sulfuric acid, nitric acid, and perchloric acid, and then the resultant solution was neutralized with ammonia water. Ammonium molybdate and hydrazine sulfate were added to the prepared solution, and then an absorbance at a wavelength of 830 nm was measured by using an ultraviolet-visible absorptiometer (UV-1700 manufactured by Shimadzu Corporation). The concentration of phosphorus element in the polyester resin was obtained from a calibration curve created in advance.

Acid Value;

20 mg of polyester resin was dissolved in 0.6 ml of a mixed solvent of deuterated hexafluoroisopropanol/deuterated chloroform (1/9 (volume ratio)), and centrifugal separation was performed. Thereafter, the resultant supernatant liquid was collected, and 10 μL of deuterated pyridine was added thereto. Then, H-NMR measurement was performed according to the same method as the above method for identifying the composition of the polyester resin, and an acid value was obtained from an NMR spectrum.

Cold Crystallization Peak Temperature (°C), Cold Crystallization Peak Heat Generation Amount (J/g), Melting Point (°C), and Melting Heat Amount (J/g);

With a differential scanning calorimeter "type DSC7000" manufactured by Hitachi High-Tech Corporation, 5 mg of polyester resin was put into an aluminum pan, and a lid was pressed to seal the aluminum pan. Then, the polyester resin was heated to 250°C at 10°C/minute, and a DSC curve during first heating was obtained. A cold crystallization peak temperature was obtained from an exothermic peak temperature in the DSC curve, and a cold crystallization peak heat generation amount was obtained as an integral value obtained from intersections of an extrapolated baseline and an exothermic curve generated by crystallization. A melting point was obtained from an endothermic peak temperature in the DSC curve, and a melting heat amount was obtained as an integral value obtained from intersections of an extrapolated baseline and an endothermic curve generated by change at the time of melting.

Hereinafter, preparation of an aluminum-containing ethylene glycol solution and a phosphorus-containing ethylene glycol solution used as catalysts will be described.

<Preparation of Aluminum-Containing Ethylene Glycol Solution s>

A 20-g/L aqueous solution of basic aluminum acetate and an equal amount (volume ratio) of ethylene glycol were charged together into a compounding tank and stirred at room temperature (23°C) for several hours. Then, while the resultant mixture was being stirred under a decreased pressure (3 kPa) at 50 to 90°C for several hours, water was distilled from the system. Consequently, an aluminum-containing ethylene glycol solution s containing 20 g/L of the aluminum compound was prepared.

<Preparation of Phosphorus-Containing Ethylene Glycol Solution t>

Irganox 1222 (manufactured by BASF SE) as a phosphorus compound and ethylene glycol were set together into a compounding tank and were subjected to heat treatment at 175°C for 150 minutes while being stirred under nitrogen purge. Consequently, a phosphorus-containing ethylene glycol solution t containing 50 g/L of the phosphorus compound was prepared.

(Example 1)

Furan-2,5-dicarboxylic acid (100 mol%) as a polyvalent carboxylic acid component and ethylene glycol (200 mol%) as a polyhydric alcohol component having a molar quantity that was 2 times the molar quantity of the polyvalent carboxylic acid component were set into a stirrer-equipped two-liter autoclave of an electrically heated wire heater type made of stainless steel. The blending amounts of these raw material monomers were set such that the resin composition exhibited the corresponding values indicated in Table 1. Diethylene glycol contained in the resin composition was not intentionally added and was obtained through condensation of the ethylene glycol. Furthermore, 0.3 mol% of triethylamine was added with respect to the polyvalent carboxylic acid component, and, while water was being distilled to the outside of the system at 240°C under a normal pressure, an esterification reaction was performed for 120 minutes. Consequently, an ester oligomer having an esterification rate of 95% was obtained.

Antimony trioxide as a catalyst was added to the obtained ester oligomer such that 250 ppm by mass of antimony element was contained with respect to the mass of the obtained polyester resin.

Thereafter, the temperature of the system was increased to 270°C over one hour, and, during this increase, the pressure of the system was gradually decreased to 0.15 kPa. Under these conditions, a polycondensation reaction was performed until arrival at a target melt viscosity. Thereafter, the resin was supplied to a twin-screw extruder (barrel temperature: 215°C, screw rotation speed: 150 rpm) and was melt-extruded while a shear stress was being applied to the polyester resin in a state where the actual temperature of the resin was 216°C. The extruded strand was rapidly cooled in a water bath. Then, the cooled strand was pelletized with a cutter, whereby a polyester resin was obtained. Results regarding the obtained polyester resin are indicated in Table 1. In addition, the temperature dependence of the melt viscosity of the obtained polyester resin is shown in FIG. 1.

(Example 2)

An ester oligomer having an esterification rate of 95% was obtained in the same manner as in Example 1.

The same processing as that in Example 1 was performed, except that a liquid mixture was added as a catalyst to the obtained ester oligomer. The liquid mixture was obtained by mixing the aluminum-containing ethylene glycol solution s and the phosphorus-containing ethylene glycol solution t prepared according to the above respective methods into one liquid such that the masses of aluminum element and phosphorus element with respect to the mass of the obtained polyester resin became the corresponding amounts indicated in Table 1. Results regarding the obtained polyester resin are indicated in Table 1.

(Example 3)

The same processing as that in Example 1 was performed, except that: the catalyst was changed to tetra-n-butoxytitanium; and the tetra-n-butoxytitanium was added such that the mass of titanium element with respect to the mass of the obtained polyester resin became the corresponding amount indicated in Table 1. Results regarding the obtained polyester resin are indicated in Table 1.

(Example 4)

The same processing as that in Example 1 was performed, except that the catalyst was changed to germanium dioxide; and the germanium dioxide was added such that the mass of germanium element with respect to the mass of the obtained polyester resin became the corresponding amount indicated in Table 1. Results regarding the obtained polyester resin are indicated in Table 1.

(Example 5)

The same processing as that in Example 1 was performed, except that the barrel temperature of the twin-screw extruder was changed to 230°C. Results regarding the obtained polyester resin are indicated in Table 1.

(Example 6)

The same processing as that in Example 1 was performed, except that the barrel temperature of the twin-screw extruder was changed to 200°C. Results regarding the obtained polyester resin are indicated in Table 1. Meanwhile, the melt viscosity at 200°C was unmeasurable with the Capilograph, and thus the relevant results are indicated as "Unmeasurable" in Table 1.

(Example 7)

The same processing as that in Example 1 was performed, except that, after the arrival at the target melt viscosity in the polycondensation reaction, a PBT oligomer (Polycizer A-55 manufactured by DIC CORPORATION) was added as a crystal nucleating agent such that 1% by mass of the PBT oligomer was contained with respect to the polyester resin. Results regarding the obtained polyester resin are indicated in Table 1.

(Example 8)

The same processing as that in Example 7 was performed, except that talc (SG-95 manufactured by Nippon Talc Co., Ltd.) was used as a crystal nucleating agent. Results regarding the obtained polyester resin are indicated in Table 1.

(Example 9)

The polyester resin obtained in Example 1 was dried with a vacuum dryer at 80°C for 200 hours, 10 g of the dried polyester resin was put into a glass container, the degree of vacuum was maintained at 1 Torr or less, and solid-state polymerization was performed for six hours in an oil bath at 200°C. Results regarding the obtained polyester resin are indicated in Table 1.

(Example 10)

The polyester resin obtained in Example 1 was dried with a vacuum dryer at 80°C for 200 hours, 10 g of the dried polyester resin was put into a glass container, the degree of vacuum was maintained at 1 Torr or less, and solid-state polymerization was performed for 12 hours in an oil bath at 200°C. Results regarding the obtained polyester resin are indicated in Table 1.

(Example 11)

The same processing as that in Example 1 was performed, except that the polyvalent carboxylic acid component was changed to 98 mol% of furan-2,5-dicarboxylic acid and 2 mol% of succinic acid. Results regarding the obtained polyester resin are indicated in Table 1.

(Comparative Example 1)

Furan-2,5-dicarboxylic acid (100 mol%) as a polyvalent carboxylic acid component and ethylene glycol (200 mol%) as a polyhydric alcohol component having a molar quantity that was 2 times the molar quantity of the polyvalent carboxylic acid component were set into a stirrer-equipped two-liter autoclave of an electrically heated wire heater type made of stainless steel. The blending amounts of these raw material monomers were set such that the resin composition exhibited the corresponding values indicated in Table 1. Furthermore, 0.3 mol% of triethylamine was added with respect to the polyvalent carboxylic acid component, and, while water was being distilled to the outside of the system at 240°C under a normal pressure, an esterification reaction was performed for 120 minutes. Consequently, an ester oligomer having an esterification rate of 95% was obtained.

Antimony trioxide as a catalyst was added to the obtained ester oligomer such that 250 ppm by mass of antimony element was contained with respect to the mass of the obtained polyester resin.

Thereafter, the temperature of the system was increased to 270°C over one hour, and, during this increase, the pressure of the system was gradually decreased to 0.15 kPa. Under these conditions, a polycondensation reaction was performed until arrival at a target melt viscosity. Thereafter, the strand extruded from the autoclave was rapidly cooled in a water bath. Then, the cooled strand was pelletized with a cutter, whereby a polyester resin was obtained. Results regarding the obtained polyester resin are indicated in Table 1.

(Comparative Example 2)

The same processing as that in Comparative Example 1 was performed, except that the amount of the antimony trioxide was changed to 400 ppm by mass. Results regarding the obtained polyester resin are indicated in Table 1.

(Comparative Example 3)

The same processing as that in Comparative Example 1 was performed, except that, after the arrival at the target melt viscosity in the polycondensation reaction, the PBT oligomer (Polycizer A-55 manufactured by DIC CORPORATION) was added as a crystal nucleating agent such that 1% by mass of the PBT oligomer was contained with respect to the polyester resin. Results regarding the obtained polyester resin are indicated in Table 1.

(Comparative Example 4)

The same processing as that in Example 1 was performed, except that the barrel temperature of the twin-screw extruder was changed to 250°C. Results regarding the obtained polyester resin are indicated in Table 1.

In each of Examples 1 to 11, a polyester resin in which the cold crystallization peak during the first heating was observed within a range of 145 to 185°C and the heat generation amount during the first heating was 3 J/g or more, was obtained. Examples 2 to 4 were each an example in which the catalyst was changed from the catalyst in Example 1. Regardless of the type of the catalyst, a favorable crystallization rate was obtained, and the change amount of the reduced viscosity between before and after the pyrolysis test was small. Thus, favorable results were obtained. Examples 5 and 6 were each an example in which the temperature at the time of applying a shear stress was changed from the temperature in Example 1. There was a tendency that increase in the temperature led to decrease in the shear stress, and decrease in the temperature led to increase in the shear stress. Therefore, in Example 6, the shear stress was high and unmeasurable. However, favorable results were obtained in both Examples. Examples 7 and 8 were each an example in which a crystal nucleating agent was added, and favorable results were obtained in both Examples. Examples 9 and 10 were each an example in which solid-state polymerization was performed. It can be seen that the reduced viscosities were further improved. Example 11 was an example of a polyester resin in which succinic acid was copolymerized, and it can be seen that: the cold crystallization peak temperature during the first heating was lowest; and the crystallization rate was high.

Meanwhile, in Comparative Example 1, the step of applying a shear stress was not performed, no cold crystallization peak during the first heating was observed, and thus it can be seen that the crystallization rate was insufficient. Comparative Example 2 was an example in which the amount of the catalyst was more than the amount in Comparative Example 1. In Comparative Example 2, improvement of the crystallization rate was achieved even though the step of applying a shear stress was not performed, but the change amount of the reduced viscosity between before and after the pyrolysis test was large, and pyrolytic properties deteriorated. Thus, Comparative Example 2 was not preferable in practical use. Comparative Example 3 was an example in which a crystal nucleating agent was added to the resin in Comparative Example 1. In Comparative Example 3, no cold crystallization peak during the first heating was observed, and thus it can be seen that the crystallization rate was insufficient. Comparative Example 4 was an example in which the temperature at the time of applying a shear stress was more than the temperature in Example 1, and the applied shear stress was less than the applied shear stress in Example 1. Since a sufficient shear stress was not applied, no cold crystallization peak during the first heating was observed, and improvement of the crystallization rate was not achieved.

[Table 1]

| | | unit | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 | Comparative Example 4 |
|---|---|---|---|---|---|---|---|---|---|---|---|---|---|---|---|---|---|
| Composition | FDCA | mol% | 100 | 100 | 100 | 100 | 100 | 100 | 100 | 100 | 100 | 100 | 98 | 100 | 100 | 100 | 100 |
| | Succinic acid | mol% | | | | | | | | | | | 2 | | | | |
| | EG | mol% | 98 | 98 | 98 | 98 | 98 | 98 | 98 | 98 | 98 | 98 | 98 | 98 | 98 | 98 | 98 |
| | DEG | mol% | 2 | 2 | 2 | 2 | 2 | 2 | 2 | 2 | 2 | 2 | 2 | 2 | 2 | 2 | 2 |
| Polymerization catalyst | Sb | ppm | 250 | | | | 250 | 250 | 250 | 250 | 250 | 250 | 250 | 250 | 400 | 250 | 250 |
| | Al | ppm | | 30 | | | | | | | | | | | | | |
| | P | ppm | | 75 | | | | | | | | | | | | | |
| | Ti | ppm | | | 20 | | - | | | | | | | | | | |
| | Ge | ppm | | | | 250 | | | | | | | | | | | |
| Crystal nucleating agent | PBT oligomer | mass% | | | | | | | 1 | | | | | | | 1 | |
| | Talc | mass% | | | | | | | | 1 | | | | | | | |
| Shear stress application step | Barrel temperature | °C | 215 | 215 | 215 | 215 | 230 | 200 | 215 | 215 | 215 | 215 | 215 | - | - | - | 250 |
| | Screw rotation speed | rpm | 150 | 150 | 150 | 150 | 150 | 150 | 150 | 150 | 150 | 150 | 150 | - | - | - | 150 |
| | Resin temperature | °C | 216 | 217 | 216 | 217 | 216 | 203 | 216 | 216 | 216 | 216 | 216 | - | - | - | 254 |
| | Melt viscosity | Pa·s | 1200 | 1200 | 1200 | 1200 | 700 | unmeasurable | 1200 | 1200 | 1200 | 1200 | 1200 | - | - | - | 400 |
| | Shear stress | MPa | 0.65 | 0.65 | 0.65 | 0.65 | 0.38 | unmeasurable | 0.65 | 0.65 | 0.65 | 0.65 | 0.65 | - | - | - | 0.22 |

| Physical properties | | unit | Example 1 | Example 2 | Example 3 | Example 4 | Example 5 | Example 6 | Example 7 | Example 8 | Example 9 | Example 10 | Example 11 | Comparative Example 1 | Comparative Example 2 | Comparative Example 3 | Comparative Example 4 |
|---|---|---|---|---|---|---|---|---|---|---|---|---|---|---|---|---|---|
| | Cold crystallization peak temperature | °C | 169 | 178 | 175 | 170 | 169 | 167 | 167 | 167 | 169 | 169 | 166 | - | 169 | - | - |
| | Cold crystallization heat amount | J/g | 16 | 11 | 13 | 16 | 6 | 30 | 20 | 19 | 16 | 16 | 17 | - | 18 | - | - |
| | Melting point | °C | 214 | 214 | 213 | 213 | 214 | 213 | 214 | 214 | 214 | 214 | 213 | 214 | 214 | 214 | 214 |
| | Melting heat amount | J/g | 17 | 13 | 13 | 15 | 8 | 22 | 22 | 20 | 17 | 17 | 20 | 1 | 19 | 2 | 1 |
| | Reduced viscosity | dl/g | 0.59 | 0.61 | 0.59 | 0.61 | 0.57 | 0.59 | 0.58 | 0.57 | 0.65 | 0.71 | 0.61 | 0.60 | 0.58 | 0.59 | 0.53 |
| | Change amount of reduced viscosity after pyrolysis test | dl/g | 0.13 | 0.09 | 0.14 | 0.12 | 0.12 | 0.12 | 0.13 | 0.13 | 0.13 | 0.13 | 0.13 | 0.13 | 0.19 | 0.12 | 0.14 |
| | Acid value | eq/ton | 13 | 10 | 14 | 12 | 15 | 13 | 13 | 13 | 13 | 13 | 12 | 13 | 17 | 14 | 17 |

"-" in the table indicates "undetectable".

FDCA: furan-2,5-dicarboxylic acid, EG: ethylene glycol, DEG: diethylene glycol Sb: antimony, Al: aluminum, P: phosphorus, Ti: titanium, Ge: germanium

EP 4 671 299 A1

19

INDUSTRIAL APPLICABILITY

The polyester resin having a furan backbone of the present invention can achieve both excellent thermal stability and a high crystallization rate. Therefore, it is possible to provide a polyester resin having a furan backbone, the polyester resin allowing suppression of pyrolysis during processing and having a high strength. **In** addition, the polyester resin can be suitably used as a material for various molded products such as films, fibers, beverage bottles, and molded products for optical purposes. Consequently, the polyester resin can be produced through a simple method, and a polyester resin that allows suppression of $CO_2$ emissions can be produced from the viewpoint of LCA. **In** addition, a polyester resin having a high biomass degree can be produced, and an environmentally-friendly and sustainable polyester resin can be produced. **In** addition, a polyester resin having a high crystallization rate can be obtained through the production method for the polyester resin of the present invention. By swift crystallization, troubles regarding processing such as blocking of pellets can be decreased, and productivity can be improved.

**Claims**

1. A polyester resin containing a polyvalent carboxylic acid component and a polyhydric alcohol component as constituent components, wherein
the polyester resin satisfies the following (1) to (4):

   (1) the polyester resin contains a polyvalent carboxylic acid having a furan backbone as the polyvalent carboxylic acid component, and contains ethylene glycol as the polyhydric alcohol component;
   (2) when measured through differential scanning calorimetry (DSC) at a heating rate of 10°C/minute, a cold crystallization peak temperature of the polyester resin during first heating is within a range of 145 to 185°C and a heat generation amount of the polyester resin during the first heating is 3 J/g or more;
   (3) a reduced viscosity of the polyester resin is 0.50 dl/g or more; and
   (4) the polyester resin contains at least one type of metal element selected from antimony, aluminum, titanium, and germanium, and a total content of the metal element is 350 ppm by mass or less.

2. The polyester resin according to claim 1, wherein the polyester resin contains 0.1 to 5 mol% of diethylene glycol with respect to a total of 100 mol% of the polyhydric alcohol component.

3. The polyester resin according to claim 1, wherein the polyester resin contains 0.001 to 4% by mass of a crystal nucleating agent.

4. The polyester resin according to claim 1, wherein the polyester resin contains 80 mol% or more of a unit formed from the polyvalent carboxylic acid having the furan backbone and the ethylene glycol.

5. The polyester resin according to claim 1, wherein a change amount of the reduced viscosity between before and after heat treatment at 280°C for one hour, is 0.17 dl/g or less.

6. The polyester resin according to claim 1, wherein a melting point of the polyester resin is 200°C or more.

7. A polyester resin pellet formed from the polyester resin according to any one of claims 1 to 6.

8. A bottle formed from the polyester resin according to any one of claims 1 to 6.

9. A film formed from the polyester resin according to any one of claims 1 to 6.

10. A fiber formed from the polyester resin according to any one of claims 1 to 6.

11. A production method for a polyester resin containing a polyvalent carboxylic acid component and a polyhydric alcohol component as constituent components, the production method comprising:

    a step of performing a polycondensation reaction between the polyvalent carboxylic acid component and the polyhydric alcohol component; and
    a step of applying a shear stress to a molten composition of a reaction product obtained through the step of performing a polycondensation reaction, wherein

the polyvalent carboxylic acid component contains a polyvalent carboxylic acid component having a furan backbone, and
the polyhydric alcohol component contains ethylene glycol.

12. The production method for the polyester resin according to claim 11, wherein the step of applying a shear stress includes applying a shear stress of 0.25 MPa or more.

13. The production method for the polyester resin according to claim 11, wherein the step of applying a shear stress includes applying a shear stress by a twin-screw extruder.

14. A production method for a polyester resin pellet, the production method comprising:

a step of extruding the polyester resin obtained through the production method according to any one of claims 11 to 13 in a molten state;
a step of cooling the extruded polyester resin; and
a step of cutting the cooled polyester resin.

15. A production method for a polyester resin pellet, the production method comprising
a step of further performing solid-state polymerization of the polyester resin pellet obtained through the production method according to claim 14.

[FIG. 1]

## INTERNATIONAL SEARCH REPORT

| International application No. |
| --- |
| **PCT/JP2024/005758** |

**A. CLASSIFICATION OF SUBJECT MATTER**

*C08G 63/672*(2006.01)i; *C08G 63/78*(2006.01)i; *C08G 63/80*(2006.01)i
FI: C08G63/672; C08G63/78; C08G63/80

According to International Patent Classification (IPC) or to both national classification and IPC

**B. FIELDS SEARCHED**

Minimum documentation searched (classification system followed by classification symbols)

C08G63/672; C08G63/78; C08G63/80

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2015-120838 A (KAO CORPORATION) 02 July 2015 (2015-07-02) claims, paragraph [0083], examples | 1-15 |
| X | JP 2011-132506 A (CANON INC.) 07 July 2011 (2011-07-07) claims, examples | 1-15 |
| X | JP 2008-075068 A (CANON INC.) 03 April 2008 (2008-04-03) claims, examples | 1-15 |
| A | JP 2015-506389 A (NATURA COSMETICOS S.A.) 02 March 2015 (2015-03-02) entire text | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **29 March 2024** | **09 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/005758**

| Patent document cited in search report | | | Publication date (day/month/year) | Patent family member(s) | | | Publication date (day/month/year) |
|---|---|---|---|---|---|---|---|
| JP | 2015-120838 | A | 02 July 2015 | (Family: none) | | | |
| JP | 2011-132506 | A | 07 July 2011 | US | 2011/0130498 | A1 | |
| | | | | claims, examples | | | |
| | | | | EP | 2327742 | A2 | |
| | | | | CN | 102079854 | A | |
| JP | 2008-075068 | A | 03 April 2008 | US | 2009/0018264 | A1 | |
| | | | | claims, examples | | | |
| | | | | CN | 101343404 | A | |
| JP | 2015-506389 | A | 02 March 2015 | US | 2015/0141584 | A1 | |
| | | | | entire text | | | |
| | | | | WO | 2013/097013 | A1 | |
| | | | | EP | 2797982 | A1 | |
| | | | | FR | 2985260 | A1 | |
| | | | | CA | 2859429 | A1 | |
| | | | | CN | 104144967 | A | |
| | | | | MX | 2014007778 | A | |
| | | | | BR | 112014016149 | A | |

Form PCT/ISA/210 (patent family annex) (July 2022)

24

## REFERENCES CITED IN THE DESCRIPTION

**Patent documents cited in the description**

- JP 2013155388 A

- JP 2023024347 A

**Non-patent literature cited in the description**

- *RSC Adv*, 2016, vol. 6, 101578-101586